# EUROPÄISCHE PATENTANMELDUNG

(11) **EP 3 360 620 A1**
(43) Veröffentlichungstag der Anmeldung: **15.08.2018**
(21) Anmeldenummer: 17020052.1
(22) Anmeldetag: 10.02.2017
(51) Int. Cl.: B21D 13/02, B21D 43/02

(54) **VERFAHREN UND VORRICHTUNG ZUM HERSTELLEN EINES GEWELLTEN PACKUNGSBLECHS FÜR EINE STRUKTURIERTE PACKUNG**

(71) Anmelder: Linde Aktiengesellschaft, 80331 München (DE)
(72) Erfinder: Kanzler, Karlmann, 84504 Altötting (DE)
(74) Vertreter: Meilinger, Claudia Sabine

(57) **Zusammenfassung**

Ein Verfahren zum Herstellen eines gewellten Packungsblechs (10) für eine strukturierte Packung (3) einer Stoffaustauschkolonne (1), mit folgenden Schritten:
a) Bereitstellen (S1) eines unverformten Packungsblechs (10'), b) Umformen (S2) des Packungsblechs (10') mit Hilfe einer ersten Biegekante (37, 44) eines Umformwerkzeugs (15), um an dem Packungsblech (10') eine Welle (13') anzuformen, c) Transport (S3) des Packungsblechs (10') in einer Maschinenrichtung (M), und
d) Erneutes Umformen (S4) des Packungsblechs (10') mit Hilfe einer in der Maschinenrichtung (M) von der ersten Biegekante (37, 44) beabstandet angeordneten zweiten Biegekante (41, 45) des Umformwerkzeugs (15), um die Welle (13') zu vertiefen.

## Beschreibung

Die Erfindung betrifft ein Verfahren zum Herstellen eines gewellten Packungsblechs für eine strukturierte Packung einer Stoffaustauschkolonne und eine Vorrichtung zum Herstellen eines derartigen Packungsblechs.

Mit Hilfe von Stoffaustauschkolonnen, wie Rektifikations- oder Luftzerlegungssäulen, ist es möglich, verflüssigte Luft in ihre Bestandteile zu zerlegen. Eine derartige Stoffaustauschkolonne weist einen zylinderförmigen Behälter auf, in dem sogenannte Packungen angeordnet sind. Hierbei wird zwischen ungeordneten und geordneten Packungen unterschieden. Ungeordnete Packungen sind Schüttungen aus definiert geformten Körpern, wie Ringen, Zylindern, Sattelkörpern oder dergleichen. Im Gegensatz hierzu werden bei geordneten Packungen Metallgewebe oder-bleche so gefaltet und/oder gewickelt, dass es zu einer intensiven Lenkung des Dampfes und der Flüssigkeit und damit verbundenem intensiven Kontakt beider kommt. Bei geordneten Packungen werden mehrere Packungsscheiben aufeinandergestapelt. Die Packungsscheiben sind jeweils wiederum auf einer Vielzahl an aufeinandergestapelten gewellten Packungsblechen aufgebaut.

Die EP 0 739 846 A1 beschreibt eine Vorrichtung zum Herstellen eines schrägplissierten Metallstreifens. Die Vorrichtung umfasst ein Paar an parallel angeordneten, ineinander greifenden Zahnwalzen.

Die EP 1 044 787 B1 zeigt ein Verfahren zum Formgeben von streifenförmigen Folien. Bei dem Verfahren werden ineinander greifende Zahnwalzen verwendet.

Die CN 203678982 U beschreibt eine Vorrichtung zum Herstellen eines gewellten Metallstreifens. Die Vorrichtung umfasst zwei Werkzeughälften, wobei eine obere Werkzeughälfte zum Umformen des Metallstreifens senkrecht auf diesen zu gefahren wird.

Die Aufgabe der vorliegenden Erfindung besteht darin, ein verbessertes Verfahren und eine verbesserte Vorrichtung zum Herstellen eines gewellten Packungsblechs für eine strukturierte Packung einer Stoffaustauschkolonne zur Verfügung zu stellen.

Demgemäß wird ein Verfahren zum Herstellen eines gewellten Packungsblechs für eine strukturierte Packung einer Stoffaustauschkolonne vorgeschlagen. Das Verfahren weist folgende Schritte auf:
a) Bereitstellen eines unverformten Packungsblechs, b) Umformen des Packungsblechs mit Hilfe einer ersten Biegekante eines Umformwerkzeugs, um an dem Packungsblech eine Welle anzuformen, c) Transport des Packungsblechs in einer Maschinenrichtung, und d) erneutes Umformen des Packungsblechs mit Hilfe einer in der Maschinenrichtung von der ersten Biegekante beabstandet angeordneten zweiten Biegekante des Umformwerkzeugs, um die Welle zu vertiefen.

Dadurch, dass die Welle mehrstufig oder schrittweise angeformt wird, wird das Packungsblech bei jedem Hub des Umformwerkzeugs nur gering verformt. Hierdurch ist das Packungsblech durch die Umformung im Vergleich zu bekannten Verfahren, bei denen die Wellen in einem Schritt angeformt werden, nicht so stark mechanisch belastet und es können bei dem Verfahren höhere Durchsatzgeschwindigkeiten realisiert werden.

Darunter, dass die Welle vertieft wird, ist zu verstehen, dass eine Tiefe der Welle, die als ein Abstand zwischen einem Wellental und einem Wellenberg der Welle definiert ist, schrittweise vergrößert wird. Das unverformte Packungsblech kann beispielsweise als sogenanntes Coil bereitgestellt werden. Zum Herstellen des gewellten Packungsblechs kann das unverformte Packungsblech vor dem Umformen oder nach dem Umformen abgelängt werden. Die Maschinenrichtung ist definiert als eine Richtung, in der das Packungsblech durch das Umformwerkzeug gefördert wird. Der Transport kann allerdings optional auch entgegen der Maschinenrichtung erfolgen. Vorzugsweise umfasst das Umformwerkzeug eine erste Werkzeughälfte und eine zweite Werkzeughälfte.

Mit Hilfe des Verfahrens wird kontinuierlich eine beliebige Anzahl an Wellen an das Packungsblech angeformt. Bevorzugt weist jede der beiden Werkzeughälften eine erste Biegekante und eine zweite Biegekante auf. Zumindest weist die erste Werkzeughälfte die erste Biegekante und die zweite Biegekante auf. Die erste Biegekante ist nicht identisch mit der zweiten Biegekante. Das heißt, die erste Biegekante und die zweite Biegekante sind zwei voneinander getrennte Bauteile. Insbesondere sind die Biegekanten linear voneinander beabstandet angeordnet. Das heißt, die Biegekanten sind nicht umfänglich auf einer Biegewalze oder Zahnwalze angeordnet. Die zweite Werkzeughälfte weist zumindest eine erste Biegekante auf, die zwischen der ersten Biegekante und der zweiten Biegekante der ersten Werkzeughälfte angeordnet ist. Die Welle wird dann zwischen den einander gegenüberliegenden Biegekanten der Werkzeughälften des Umformwerkzeugs an das Packungsblech angeformt. Das Packungsblech wird in einem Umformbereich des Umformwerkzeugs während des Umformprozesses nur mit Hilfe der Biegekanten geführt beziehungsweise gehalten.

Gemäß einer Ausführungsform wird das Packungsblech nach dem Schritt d) mit Hilfe einer dritten Biegekante bis n-ten Biegekante des Umformwerkzeugs so oft umgeformt, bis die Welle eine gewünschte Tiefe aufweist, wobei das Packungsblech vor jedem Umformen jeweils in der Maschinenrichtung transportiert wird.

Beispielsweise weist die erste Werkzeughälfte des Umformwerkzeugs eine erste Biegekante, eine in der Maschinenrichtung beabstandet von der ersten Biegekante angeordnete zweite Biegekante sowie eine in der Maschinenrichtung von der zweiten Biegekante beabstandet angeordnete dritte Biegekante auf. Die Anzahl der Biegekanten ist beliebig. Dementsprechend weist die zweite Werkzeughälfte vorzugsweise eine erste Biegekante, eine in der Maschinenrichtung beabstandet von der ersten Biegekante angeordnete zweite Biegekante, eine in der Maschinenrichtung von der zweiten Biegekante beabstandet angeordnete dritte Biegekante sowie eine in der Maschinenrichtung von der dritten Biegekante beabstandet angeordnete vierte Biegekante auf. Die Biegekanten der ersten Werkzeughälfte sind dabei so angeordnet, dass diese jeweils zwischen zwei Biegekanten der zweiten Werkzeughälfte angeordnet sind. Die Anzahl der Biegekanten ist beliebig. Das Umformen des Packungsblechs und das Transportieren desselben werden solange durchgeführt, bis die Welle die gewünschte Tiefe aufweist. Dabei werden bevorzugt mehrere Wellen gleichzeitig angeformt. Die Tiefe der Welle ist definiert als der Abstand zwischen einem Wellenberg und einem Wellental der Welle oder umgekehrt.

Gemäß einer weiteren Ausführungsform werden zum Umformen des Packungsblechs eine erste Werkzeughälfte und eine zweite Werkzeughälfte des Umformwerkzeugs gegensinnig und senkrecht zu der Maschinenrichtung bewegt.

Das heißt, zum Umformen des Packungsblechs werden die erste Werkzeughälfte und die zweite Werkzeughälfte aufeinander zu in Richtung auf das Packungsblech hin bewegt. Durch die symmetrische Arbeitsweise der ersten Werkzeughälfte und der zweiten Werkzeughälfte zu einer Symmetrieebene des Packungsblechs wird eine Mittelebene des Packungsblechs während der Bearbeitung nicht verschoben. Hierzu kann eine Anregung einer Blechschwingung senkrecht zu der Mittelebene des Packungsblechs verhindert werden. Hierdurch kann die Durchsatzgeschwindigkeit bei dem Verfahren erhöht werden.

Gemäß einer weiteren Ausführungsform werden zum Umformen des Packungsblechs die erste Werkzeughälfte und die zweite Werkzeughälfte gleichsinnig und parallel zu der Maschinenrichtung bewegt.

Vorzugsweise werden die erste Werkzeughälfte und die zweite Werkzeughälfte sowohl gegensinnig und senkrecht zu der Maschinenrichtung als auch gleichsinnig und parallel zu der Maschinenrichtung bewegt. Durch eine rotatorische Bewegung der beiden Werkzeughälften kann ein Teil einer Vorschubbewegung des Packungsblechs realisiert werden. Auch hierdurch kann eine höhere Durchsatzgeschwindigkeit erzielt werden. Insbesondere überlagern sich die Bewegungen der ersten Werkzeughälfte und der zweiten Werkzeughälfte gegensinnig und senkrecht zu der Maschinenrichtung mit den Bewegungen der ersten Werkzeughälfte und der zweiten Werkzeughälfte gleichsinnig und parallel zu der Maschinenrichtung. Hieraus kann eine zyklische Bewegung der Werkzeughälften resultieren.

Gemäß einer weiteren Ausführungsform wird das Packungsblech mit Hilfe der zu der Maschinenrichtung parallelen Bewegung der ersten Werkzeughälfte und der zweiten Werkzeughälfte in der Maschinenrichtung transportiert.

Das Umformwerkzeug kann somit auch zusätzlich noch als Transporteinrichtung für das Packungsblech eingesetzt werden oder als Transporteinrichtung bezeichnet werden. Hierdurch kann auf eine zusätzliche Transporteinrichtung verzichtet werden. Hierdurch wird das Verfahren vereinfacht.

Gemäß einer weiteren Ausführungsform wird das Packungsblech mit Hilfe einer Bremseinrichtung abgebremst.

Mit Hilfe der Bremseinrichtung kann beispielsweise eine konstante Bremskraft auf das Packungsblech aufgebracht werden. Dies kann elektrisch durch Wirbelströme oder mechanisch durch Bremsklötze erfolgen. Die Bremskraft kann auf die Bremsklötze beispielsweise mit Hilfe einstellbarer Federn, Gewichte, Piezoaktoren oder Druckluftzylinder aufgebracht werden. Die Bremseinrichtung kann auch ein geregeltes und gesteuertes System sein. Eine Steuereinrichtung kann dabei anhand einer Kurbelwellenwinkellage einer Vorrichtung zum Herstellen des gewellten Packungsblechs aus Daten einer Lagesensorik den optimalen Zeitpunkt und die Stärke des Bremsvorgangs ermitteln, so dass das Packungsblech für den nächsten Eingriff des Umformwerkzeugs die optimale Position einnimmt. Auch hier kann die Bremse elektrisch durch Wirbelströme oder mechanisch durch Bremsklötze erfolgen. Die Bremsklötze können durch Piezoaktoren, Hydraulikzylinder oder Elektrozylinder angetrieben werden.

Gemäß einer weiteren Ausführungsform wird das Packungsblech zwischen einander gegenüberliegenden Biegekanten der ersten Werkzeughälfte und Biegekanten der zweiten Werkzeughälfte verformt.

Vorzugsweise sind die Biegekanten der ersten Werkzeughälfte und die Biegekanten der zweiten Werkzeughälfte so angeordnet, dass jede Biegekante der ersten Werkzeughälfte zwischen zwei Biegekanten der zweiten Werkzeughälfte und umgekehrt eingreift.

Gemäß einer weiteren Ausführungsform wird das Packungsblech mit Hilfe einer Transporteinrichtung, insbesondere einer berührungslosen Transporteinrichtung, weitertransportiert.

Die Transporteinrichtung kann auch als Vorschubeinrichtung bezeichnet werden. Mit Hilfe der Transporteinrichtung kann das Packungsblech in der Maschinenrichtung gefördert werden. Die Transporteinrichtung kann auch mit dem Umformwerkzeug identisch sein, und zwar dann, wenn die Werkzeughälften des Umformwerkzeugs nicht nur senkrecht zu der Maschinenrichtung, sondern auch parallel zu der Maschinenrichtung bewegt werden. Die Transporteinrichtung kann optional auch dazu eingerichtet sein, das Packungsblech entgegen der Maschinenrichtung zu transportieren. Hierdurch ist eine genaue Positionierung der Welle zu den Biegekanten möglich.

Gemäß einer weiteren Ausführungsform werden dann, wenn ein Winkel der Welle größer als 0° ist, die Biegekanten entsprechend diesem Winkel entlang eines Wellentals der Welle bewegt.

Bei dieser Ausführungsform des Verfahrens sind die erste Werkzeughälfte und die zweite Werkzeughälfte vorzugsweise so ausgebildet, dass die jeweiligen Biegeleisten, die die Biegekanten aufweisen, nicht senkrecht zu einer Seitenkante des Packungsblechs, sondern schräg in einem Winkel zu dieser angeordnet sind. Insbesondere sind die Biegeleisten damit auch schräg zu der Maschinenrichtung angeordnet. Die einzelnen Biegeleisten können dabei in der jeweiligen Werkzeughälfte seitlich verschiebbar gelagert angeordnet sein, um eine seitliche Bewegung der Biegeleisten beim Eindringen der Biegeleisten in das Packungsblech, die sich aus der Schrägwellung ergibt, zu kompensieren.

Weiterhin wird eine Vorrichtung zum Herstellen eines gewellten Packungsblechs für eine strukturierte Packung einer Stoffaustauschkolonne vorgeschlagen. Die Vorrichtung umfasst ein Umformwerkzeug, das eine erste Biegekante, die dazu eingerichtet ist, an einem unverformten Packungsblech eine Welle anzuformen, und eine in einer Maschinenrichtung von der ersten Biegekante beabstandet angeordnete zweite Biegekante umfasst, die dazu eingerichtet ist, die Welle zu vertiefen.

Zwischen dem Umformen an der ersten Biegekante und dem Umformen an der zweiten Biegekante kann das Packungsblech mit Hilfe einer Transporteinrichtung transportiert werden. Die Transporteinrichtung kann beispielsweise durch einen Walzen- oder Förderbandvorschub erfolgen. Die Transporteinrichtung kann alternativ auch identisch mit dem Umformwerkzeug sein. In diesem Fall wird das Packungsblech mit Hilfe des Umformwerkzeugs in der Maschinenrichtung transportiert. Hierzu können Werkzeughälften des Umformwerkzeugs so bewegt werden, dass diese sowohl eine Bewegung senkrecht zu der Maschinenrichtung als auch eine Bewegung parallel zu der Maschinenrichtung durchführen. Mit Hilfe der parallelen Bewegung der Werkzeughälften kann das Packungsblech in der Maschinenrichtung transportiert werden.

Gemäß einer Ausführungsform umfasst das Umformwerkzeug eine erste Werkzeughälfte und eine zweite Werkzeughälfte, die zum Umformen des Packungsblechs gegensinnig und senkrecht zu der Maschinenrichtung bewegbar sind.

Hierzu weist die Vorrichtung vorzugsweise einen ersten Werkzeugträger für die erste Werkzeughälfte und einen zweiten Werkzeugträger für die zweite Werkzeughälfte auf. Die Werkzeugträger sind jeweils in einer ersten Führungsrichtung und in einer zweiten Führungseinrichtung linear verschieblich gelagert. Mit Hilfe von Antriebseinrichtungen sind die Werkzeugträger angetrieben, um die erste Werkzeughälfte und die zweite Werkzeughälfte senkrecht zu der Maschinenrichtung auf das Packungsblech zu und von dem Packungsblech weg zu bewegen. Die Antriebseinrichtungen sind dabei so synchronisiert, dass sich die erste Werkzeughälfte und die zweite Werkzeughälfte gegensinnig aufeinander zu oder voneinander weg bewegen. Alternativ kann auch eine Antriebseinrichtung für beide Werkzeugträger vorgesehen sein. Die Synchronisierung kann elektrisch, mechanisch, beispielsweise über ein Getriebe oder einen Riemenantrieb, oder hydraulisch erfolgen.

Gemäß einer weiteren Ausführungsform sind die erste Werkzeughälfte und die zweite Werkzeughälfte zum Umformen des Packungsblechs gleichsinnig und parallel zu der Maschinenrichtung bewegbar.

Vorzugsweise sind sowohl für den ersten Werkzeugträger als auch für den zweiten Werkzeugträger jeweils zwei Lagerblöcke vorgesehen. Jeder Lagerblock ist mit Hilfe des ihm zugeordneten Werkzeugträgers mit Hilfe von Kurbelwellen verbunden. Die Kurbelwellen sind an jeweiligen Exzenterachsen der Lagerblöcke und des Werkzeugträgers drehbar gelagert. Die beiden an dem Werkzeugträger vorgesehenen Exzenterachsen bewegen sich beim Umformen des Packungsblechs jeweils auf einer Kreisbahn, wodurch sowohl die Bewegung der Werkzeughälften senkrecht zu der Maschinenrichtung als auch parallel zu der Maschinenrichtung verwirklicht wird. Insbesondere sind jedem Werkzeugträger vier Kurbelwellen sowie zwei Lagerblöcke zugeordnet, die jeweils seitlich von dem Werkzeugträger positioniert sind. An den Lagerblöcken sind jeweils Exzenterachsen vorgesehen, an denen die Kurbelwellen gelagert sind. An dem jeweiligen Werkzeugträger sind entsprechende Exzenterachsen vorgesehen, an denen die Kurbelwellen ebenfalls gelagert sind. Die Exzenterachsen der Werkzeugträger bewegen sich beim Öffnen und Schließen des Umformwerkzeugs jeweils auf einer Kreisbahn. Insbesondere überlagern sich die Bewegungen der ersten Werkzeughälfte und der zweiten Werkzeughälfte gegensinnig und senkrecht zu der Maschinenrichtung mit den Bewegungen der ersten Werkzeughälfte und der zweiten Werkzeughälfte gleichsinnig und parallel zu der Maschinenrichtung. Hieraus kann eine zyklische Bewegung der Werkzeughälften resultieren.

Gemäß einer weiteren Ausführungsform umfasst die Vorrichtung ferner eine Transporteinrichtung, insbesondere eine berührungslose Transporteinrichtung, die dazu eingerichtet ist, das Packungsblech in der Maschinenrichtung zu transportieren, so dass die Welle von der ersten Biegekante zu der zweiten Biegekante transportierbar ist.

Die Transporteinrichtung kann auch als Vorschubeinrichtung bezeichnet werden. Mit Hilfe der Transporteinrichtung kann das Packungsblech in der Maschinenrichtung gefördert werden. Die Transporteinrichtung kann optional auch dazu eingerichtet sein, das Packungsblech entgegen der Maschinenrichtung zu transportieren. Hierdurch ist eine genaue Positionierung der Welle zu den Biegekanten möglich. Die Transporteinrichtung kann ein berührungsloser Blechvorschub sein, der das Packungsblech mit Hilfe von Wirbelströmen in der Maschinenrichtung fördert.

Gemäß einer weiteren Ausführungsform wiest das Umformwerkzeug eine dritte Biegekante bis n-te Biegekante auf, die in der Maschinenrichtung jeweils voneinander beabstandet angeordnet sind.

Die Anzahl der Biegekanten ist beliebig. Vorzugweise ist sowohl der ersten Werkzeughälfte als auch der zweiten Werkzeughälfte jeweils eine Vielzahl an Biegekanten zugeordnet. Insbesondere weist jede Werkzeughälfte eine Vielzahl an Biegeleisten auf, wobei jede Biegeleiste eine Biegekante umfasst. Die Biegeleisten können senkrecht zu der Maschinenrichtung angeordnet sein. Alternativ können die Biegeleisten auch schräg zu der Maschinenrichtung positioniert sein, so dass eine Schrägwellung des Packungsblechs möglich ist. Die einzelnen Biegeleisten können dabei seitlich verschiebbar gelagert angeordnet sein, um eine seitliche Bewegung beim Eindringen der Biegekanten in das Packungsblech, die sich aus der Schrägwellung ergibt, zu kompensieren.

Gemäß einer weiteren Ausführungsform verkleinert sich ein jeweiliger Abstand zwischen der ersten Biegekante bis n-ten Biegekante in der Maschinenrichtung.

Insbesondere ist ein erster Abstand zwischen einer ersten Biegekante und einer zweiten Biegekante der ersten Werkzeughälfte kleiner als ein zweiter Abstand zwischen der zweiten Biegekante und der dritten Biegekante der ersten Werkzeughälfte. Korrespondierend dazu ist ein erster Abstand zwischen einer ersten Biegekante und einer zweiten Biegekante der zweiten Werkzeughälfte größer als ein zweiter Abstand zwischen der zweiten Biegekante und der dritten Biegekante der zweiten Werkzeughälfte. Weiterhin ist ein dritter Abstand zwischen der dritten Biegekante und der vierten Biegekante der zweiten Werkzeughälfte kleiner als der zweite Abstand. Das heißt, für beide Werkzeughälften gilt, dass sich der Abstand zwischen den Biegekanten in der Maschinenrichtung betrachtet schrittweise verkleinert. Es können aber auch, insbesondere benachbarte, Biegekanten vorgesehen sein, die gleichmäßig voneinander beabstandet angeordnet sind.

Gemäß einer weiteren Ausführungsform vergrößert sich ein jeweiliger Abstand, mit dem sich die erste Biegekante bis n-te Biegekante in einen Umformbereich des Umformwerkzeugs hineinerstreckt in der Maschinenrichtung.

Der Abstand kann auch als Tiefe bezeichnet werden. Der Umformbereich ist vorzugsweise symmetrisch zu einer Symmetrieebene des Packungsblechs angeordnet. Der Umformbereich ist definiert als ein Bereich, in den die Biegekanten der ersten Werkzeughälfte und der zweiten Werkzeughälfte beim Umformen des Packungsblechs eindringen. Insbesondere ist ein dritter Abstand, mit dem sich die dritte Biegekante der ersten Werkzeughälfte in den Umformbereich hineinerstreckt, größer als ein zweiter Abstand, mit dem sich die zweite Biegekante in den Umformbereich hineinerstreckt, welcher wiederum größer ist als ein erster Abstand, mit dem sich die erste Biegekante der ersten Werkzeughälfte in den Umformbereich hineinerstreckt. Der dritte Abstand der dritten Biegekante der ersten Werkzeughälfte kann der gewünschten Tiefe entsprechen, die die Welle aufweist.

Weiterhin ist ein vierter Abstand, mit dem sich die vierte Biegekante der zweiten Werkzeughälfte in den Umformbereich hineinerstreckt, bevorzugt größer als ein dritter Abstand, mit dem sich die dritte Biegekante der zweiten Werkzeughälfte in den Umformbereich hineinerstreckt, welche wiederum insbesondere größer ist als ein zweiter Abstand, mit dem sich die zweite Biegekante der zweiten Werkzeughälfte in den Umformbereich hineinerstreckt, welche wiederum bevorzugt größer ist als ein erster Abstand, mit der sich eine erste Biegekante der zweiten Werkzeughälfte in den Umformbereich hineinerstreckt. Das heißt, die Abstände zwischen den Biegekanten werden in der Maschinenrichtung betrachtet kleiner, wohingegen die Abstände, mit denen die Biegekanten in den Umformbereich eindringen, in der Maschinenrichtung größer werden. Es können aber auch, insbesondere benachbarte, Biegekanten vorgesehen sein, die gleich weit in den Umformbereich eindringen.

Gemäß einer weiteren Ausführungsform umfasst die Vorrichtung ferner eine Bremseinrichtung, die dazu eingerichtet ist, das Packungsblech in der Maschinenrichtung zu stoppen, so dass die Welle an einer der Biegekanten positionierbar ist.

Insbesondere ist die Bremseinrichtung dazu eingerichtet, das Packungsblech so zu stoppen, dass die Welle über oder unter der entsprechenden Biegekante positioniert wird. Mit Hilfe der Bremseinrichtung kann das Packungsblech exakt positioniert werden, so dass die Welle genau an der gewünschten Biegekante positioniert wird. Insbesondere wird die Welle unter oder über der jeweiligen zweiten Biegekante angehalten. Die Bremseinrichtung kann eine Bremseinrichtung zum Aufbringen einer konstanten Bremskraft sein. Dies kann elektrisch durch Wirbelströme oder mechanisch durch Bremsklötze erfolgen. Die Bremskraft kann auf die Bremsklötze durch einstellbare Federn, Gewichte, Piezoaktoren oder Druckluftzylinder aufgebracht werden. Die Bremseinrichtung kann auch ein geregeltes und gesteuertes System sein.

Weitere mögliche Implementierungen des Verfahrens und/oder der Vorrichtung umfassen auch nicht explizit genannte Kombinationen von zuvor oder im Folgenden bezüglich der Ausführungsbeispiele beschriebenen Merkmale und Ausführungsformen. Dabei wird der Fachmann auch Einzelaspekte als Verbesserungen oder Ergänzungen zu der jeweiligen Grundform des Verfahrens und/oder der Vorrichtung hinzufügen.

Weitere vorteilhafte Ausgestaltungen und Aspekte des Verfahrens und/oder der Vorrichtung sind Gegenstand der Unteransprüche sowie der im Folgenden beschriebenen Ausführungsbeispiele des Verfahrens und/oder der Vorrichtung. Im Weiteren werden das Verfahren und/oder die Vorrichtung anhand von bevorzugten Ausführungsformen unter Bezugnahme auf die beigelegten Figuren näher erläutert.
Fig. 1 zeigt eine schematische Schnittansicht einer Ausführungsform einer Stoffaustauschkolonne;
Fig. 2 zeigt eine schematische perspektivische Ansicht einer Ausführungsform eines Packungsblechs für eine Packung der Stoffaustauschkolonne gemäß Fig. 1;
Fig. 3 zeigt eine schematische Ansicht einer Ausführungsform einer Vorrichtung zum Herstellen eines Packungsblechs gemäß Fig. 2;
Fig. 4 zeigt eine weitere schematische Ansicht der Vorrichtung gemäß Fig. 3;
Fig. 5 zeigt eine weitere schematische Ansicht der Vorrichtung gemäß Fig. 3;
Fig. 6 zeigt eine schematische Ansicht einer Ausführungsform eines Umformwerkzeugs für die Vorrichtung gemäß Fig. 3;
Fig. 7 zeigt eine weitere schematische Ansicht des Umformwerkzeugs gemäß Fig. 6;
Fig. 8 zeigt eine schematische Ansicht einer weiteren Ausführungsform eines Umformwerkzeugs für die Vorrichtung gemäß Fig. 3;
Fig. 9 zeigt eine schematische perspektivische Ansicht des Umformwerkzeugs gemäß Fig. 8;
Fig. 10 zeigt eine schematische Ansicht einer weiteren Ausführungsform einer Vorrichtung zum Herstellen eines Packungsblechs gemäß Fig. 2;
Fig. 11 zeigt eine schematische perspektivische Ansicht der Vorrichtung gemäß Fig. 10;
Fig. 12 zeigt eine schematische Ansicht einer weiteren Ausführungsform einer Vorrichtung zum Herstellen eines Packungsblechs gemäß Fig. 2;
Fig. 13 zeigt eine schematische perspektivische Ansicht einer weiteren Ausführungsform einer Vorrichtung zum Herstellen eines Packungsblechs gemäß Fig. 2; und
Fig. 14 zeigt ein schematisches Blockdiagramm einer Ausführungsform eines Verfahrens zum Herstellen eines gewellten Packungsblechs gemäß Fig. 2.

In den Figuren sind gleiche oder funktionsgleiche Elemente mit denselben Bezugszeichen versehen worden, sofern nichts anderes angegeben ist.

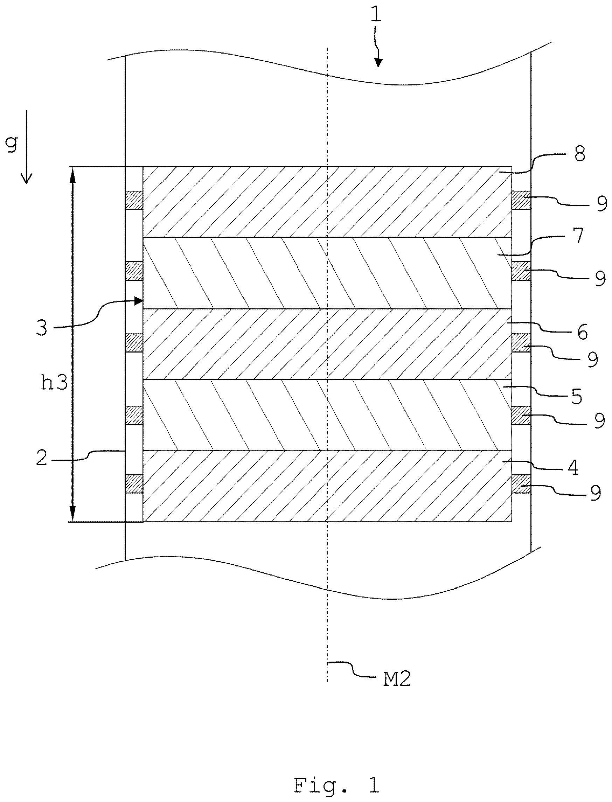

Die Fig. 1 zeigt eine stark vereinfachte schematische Schnittansicht einer Ausführungsform einer Stoffaustauschkolonne 1. Die Stoffaustauschkolonne 1 kann eine Rektifikations- oder Luftzerlegungssäule ein. Unter Rektifikation ist ein thermisches Trennverfahren zu verstehen, das eine Erweiterung der Destillation oder eine Hintereinanderschaltung vieler Destillationsschritte darstellt. Gegenüber der Destillation sind die Vorteile der Rektifikation, dass die Stoffaustauschkolonne 1 kontinuierlich betrieben werden kann und dass der Trenneffekt im Vergleich zur Destillation um ein Vielfaches höher ist, da der Dampf im Gegenstrom mit der Flüssigkeit mehrfach hintereinander in Kontakt steht. Die Stoffaustauschkolonne 1 arbeitet somit energetisch günstiger, technisch weniger aufwendig und platzsparender als eine Hintereinanderschaltung von Einfachdestillationen.

Die Stoffaustauschkolonne 1 umfasst einen Behälter 2, der eine zylinderförmige Geometrie aufweist. Der Behälter 2 kann beispielsweise aus einem Aluminiumwerkstoff oder einem Stahlwerkstoff gefertigt sein. Vorzugsweise ist der Behälter 2 aus einem Aluminiumwerkstoff gefertigt. Der Behälter 2 ist zylinderförmig um eine Symmetrie- oder Mittelachse M2 aufgebaut. Der Behälter 2 kann beispielsweise eine Höhe von 30.000 bis 50.000 Millimeter aufweisen. Der Behälter 2 kann einen kreisrunden oder annähernd kreisrunden, beispielsweise einen ovalen, Querschnitt aufweisen. Der Behälter 2 ist vorzugsweise aus einer Vielzahl Behälterabschnitte oder Mantelabschnitte aufgebaut, die stoffschlüssig miteinander verbunden sind. Die Behälterabschnitte können auch als Behältersektionen, Mantelsektionen oder Mantelschüsse bezeichnet werden. Die Mittelachse M2 ist in der Orientierung der Fig. 1 vertikal, das heißt, in einer Schwerkraftrichtung g, angeordnet.

In dem Behälter 2 ist eine Vielzahl übereinandergestapelter Packungen 3 angeordnet, von denen in der Fig. 1 jedoch lediglich eine gezeigt ist. Die Packung 3 ist eine sogenannte geordnete oder strukturierte Packung. Bei derartigen geordneten Packungen 3 werden, im Gegensatz zu ungeordneten Packungen, Metallgewebe oder Metallbleche so gefaltet und/oder gewickelt, dass es zu einer intensiven Lenkung des Dampfes und der Flüssigkeit und damit verbundenem intensiven Kontakt beider kommt. Durch eine weitere Strukturierung der Oberfläche und durch die Anbringung von Löchern werden sowohl die Benetzbarkeit der Packungsoberfläche als auch der Stoffaustausch weiter erhöht.

Die Packung 3 kann eine Vielzahl geordneter oder strukturierter Packungsscheiben 4 bis 8 aufweisen, die übereinander angeordnet sind. Die Packungsscheiben 4 bis 8 können auch als Packungslagen oder Packungsschichten bezeichnet werden. Derartige Packungsscheiben 4 bis 8 bestehen aus dünnen, gewellten und/oder gelochten Metallplatten beziehungsweise Drahtnetzen. Das Design der Packungsscheiben 4 bis 8 gewährleistet einen optimalen Austausch zwischen den unterschiedlichen Phasen (flüssig/gasförmig beziehungsweise flüssig/flüssig) bei minimalem Druckwiderstand. Die Anzahl der Packungsscheiben 4 bis 8 pro Packung 3 ist beliebig.

Die Packungsscheiben 4 bis 8 können aus senkrecht angeordneten Packungsblechen, insbesondere aus gewellten Aluminiumblechen, gefertigt sein. Die Packungsscheiben 4 bis 8 bilden aufgrund ihrer Struktur Kondensationsoberflächen, an denen beispielsweise bei der Luftzerlegung Luftbestandteile kondensieren können. Beispielsweise können die verwendeten Packungsbleche eine Dicke von 0,1 Millimeter aufweisen. Jede Packungsscheibe 4 bis 8 kann beispielsweise eine Dicke von 200 bis 500 Millimeter aufweisen. Die Packung 3 kann so eine Höhe h3 von beispielsweise 1.000 bis 7.000 Millimeter aufweisen. Zwischen dem Behälter 2 und der Packung 3 beziehungsweise zwischen dem Behälter 2 und jeder Packungsscheibe 4 bis 8 kann noch ein umlaufender Packungskragen oder Dichtkragen 9 vorgesehen sein. Der Dichtkragen 9 ist optional und somit verzichtbar.

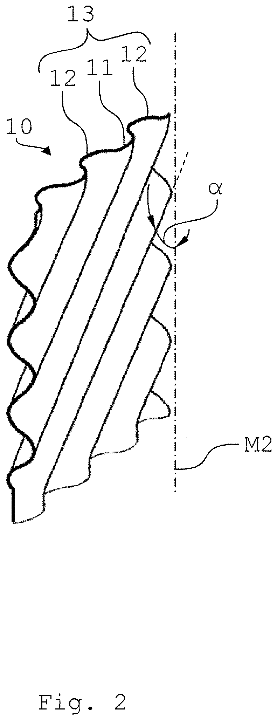

Die Fig. 2 zeigt eine schematische perspektivische Ansicht eines Teils einer Ausführungsform eines Packungsblechs 10, aus einer Vielzahl dessen die Packungsscheiben 4 bis 8 jeweils aufgebaut sind. Wie die Fig. 2 zeigt, weist das Packungsblech 10 eine gewellte Form mit Wellenbergen 11 und Wellentälern 12 auf. Die Wellenberge 11 und die Wellentäler 12 sind so angeordnet, dass jeweils ein Wellenberg 11 zwischen zwei Wellentälern 12 und ein Wellental 12 zwischen zwei Wellenbergen 11 angeordnet ist. Die Wellenberge 11 und die Wellentäler 12 bilden Wellen 13 des Packungsblechs 10. Zusätzlich kann das Packungsblech 10 Riffelungen, Lochungen, Bohrungen und/oder Durchbrüche aufweisen. Das Packungsblech 10 ist vorzugsweise aus einem Aluminiumwerkstoff gebildet und kann, wie bereits zuvor erwähnt, eine Dicke von 0,1 Millimeter aufweisen.

Zum Herstellen einer Packungsscheibe 4 bis 8 wird eine Vielzahl derartiger Packungsbleche 10 aufeinandergestapelt. Wie der Fig. 2 weiter zu entnehmen ist, verlaufen die Wellenberge 11 und die Wellentäler 12 in einem Winkel α zu der Mittelachse M2. Der Winkel α beträgt beispielsweise 45°. Benachbarte Packungsbleche 10 können so angeordnet sein, dass sich die Wellenberge 11 und die Wellentäler 12, insbesondere in einem Winkel von 90°, kreuzen.

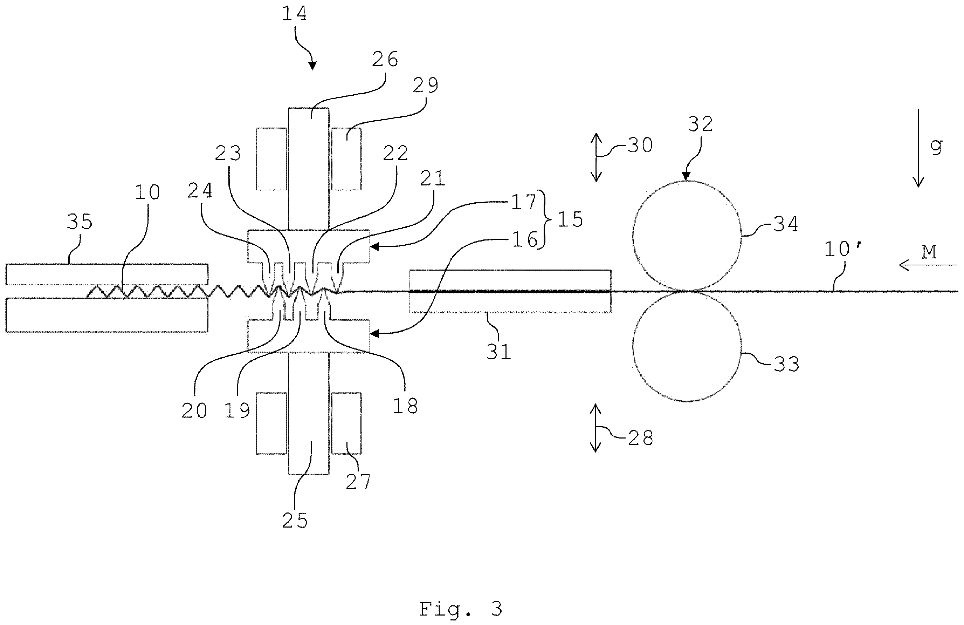

Die Fig. 3 bis 5 zeigen jeweils eine schematische Ansicht einer Ausführungsform einer Vorrichtung 14 zum Herstellen eines derartigen gewellten Packungsblechs 10 aus einem unverformten Packungsblech 10'. Die Vorrichtung 14 umfasst hierzu ein Umformwerkzeug 15. Mit Hilfe des Umformwerkzeugs 15 kann das unverformte Packungsblech 10' zu dem gewellten Packungsblech 10 umgeformt werden. Das unverformte Packungsblech 10' kann dabei als Endlosband, beispielsweise als sogenanntes Coil, vorliegen, das entweder vor dem Umformen oder nach dem Umformen auf eine gewünschte Länge abgelängt wird, um das gewellte Packungsblech 10 zu erhalten.

Das Umformwerkzeug 15 umfasst eine untere oder erste Werkzeughälfte 16, die bezüglich der Schwerkraftrichtung g unterhalb des Packungsblechs 10' angeordnet ist, und eine obere oder zweite Werkzeughälfte 17, die bezüglich der Schwerkraftrichtung g oberhalb des Packungsblechs 10' angeordnet ist. Die erste Werkzeughälfte 16 umfasst eine erste Biegeleiste 18, eine in einer Maschinenrichtung M von der ersten Biegeleiste 18 beabstandet angeordnete zweite Biegeleiste 19 sowie eine in der Maschinenrichtung M von der zweiten Biegeleiste 19 beabstandet angeordnete dritte Biegeleiste 20. Die Anzahl der Biegeleisten 18 bis 20 der ersten Werkzeughälfte 16 ist beliebig. Es können mehr als drei oder weniger als drei Biegeleisten 18 bis 20 vorgesehen sein. Die Maschinenrichtung M ist definiert als eine Richtung, in der das Packungsblech 10' durch das Umformwerkzeug 15 transportiert wird.

Die zweite Werkzeughälfte 17 weist eine bezüglich der Maschinenrichtung M vor der ersten Biegeleiste 18 der ersten Werkzeughälfte 16 angeordnete erste Biegeleiste 21, eine in der Maschinenrichtung M von der ersten Biegeleiste 21 beabstandet angeordnete zweite Biegeleiste 22, die zwischen der ersten Biegeleiste 18 und der zweiten Biegeleiste 19 der ersten Werkzeughälfte 16 angeordnet ist, eine in der Maschinenrichtung M von der zweiten Biegeleiste 22 beabstandet angeordnete dritte Biegeleiste 23, die zwischen der zweiten Biegeleiste 19 und der dritten Biegeleiste 20 der ersten Werkzeughälfte 16 angeordnet ist, sowie eine in der Maschinenrichtung M beabstandet von der dritten Biegeleiste 23 angeordnete vierte Biegeleiste 24 auf.

Die Anzahl der Biegeleisten 21 bis 24 der zweiten Werkzeughälfte 17 ist beliebig. Die zweite Werkzeughälfte 17 kann mehr oder weniger als vier Biegeleisten 21 bis 24 aufweisen. Insbesondere weist eine der Werkzeughälften 16, 17 zumindest eine Biegeleiste 18 bis 24, und die andere der beiden Werkzeughälften 16, 17 weist zumindest zwei derartige Biegeleisten 18 bis 24 auf, die beidseits der einen Biegeleiste 18 bis 24 der einen Werkzeughälfte 16, 17 angeordnet sind.

Die Vorrichtung 14 umfasst weiterhin einen ersten Werkzeugträger 25, der die erste Werkzeughälfte 16 trägt, sowie einen zweiten Werkzeugträger 26, der die zweite Werkzeughälfte 17 trägt. Der erste Werkzeugträger 25 ist an einer ersten Führungseinrichtung 27 linear geführt, so dass dieser sich senkrecht zu der Maschinenrichtung M auf das Packungsblech 10' zubewegen oder von diesem wegbewegen kann, wie in der Fig. 3 mit Hilfe eines Doppelpfeils 28 gezeigt ist. Die Vorrichtung 14 umfasst ferner eine zweite Führungseinrichtung 29, in oder an der der zweite Werkzeugträger 26 linear geführt ist, so dass dieser sich korrespondierend zu dem ersten Werkzeugträger 25 senkrecht zu der Maschinenrichtung M auf das Packungsblech 10' zubewegen oder von diesem wegbewegen kann, wie in der Fig. 3 mit Hilfe eines Doppelpfeils 30 dargestellt ist.

Die Vorrichtung 14 weist weiterhin zumindest eine Antriebseinrichtung auf, die dazu eingerichtet ist, die Werkzeugträger 25, 26 so anzutreiben, dass diese sich gegensinnig und synchron auf das Packungsblech 10' zubewegen oder von diesem wegbewegen. Hierzu kann jedem Werkzeugträger 25, 26 eine eigene Antriebsrichtung zugeordnet sein, wobei die Antriebseinrichtungen miteinander synchronisiert sind. Alternativ können die beiden Werkzeugträger 25, 26 eine gemeinsame Antriebseinrichtung aufweisen.

Dem Umformwerkzeug 15 bezüglich der Maschinenrichtung M vorgelagert ist eine Führungseinrichtung 31 vorgesehen. Mit Hilfe der Führungseinrichtung 31 kann das Packungsblech 10' von oben, von unten und von beiden Seiten geführt sein. Die Führung kann dabei durch Gleitflächen oder Rollen erfolgen.

Der Führungseinrichtung 31 ist bezüglich der Maschinenrichtung M eine Transporteinrichtung 32 vorgelagert, mit deren Hilfe das Packungsblech 10' in der Maschinenrichtung M durch das Umformwerkzeug 15 hindurchgefördert werden kann. Die Transporteinrichtung 32 kann auch als Vorschubeinrichtung bezeichnet werden. Die Transporteinrichtung 32 kann durch einen Walzen- oder Förderbandvorschub erfolgen. Vorzugsweise befindet sich oberhalb und unterhalb des Packungsblechs 10' eine angetriebene Walze 33, 34 oder ein Förderband.

Alternativ kann die Transporteinrichtung 32 auch ein berührungsloser Blechvorschub sein, der das Packungsblech 10' mit Hilfe von Wirbelströmen in der Maschinenrichtung M fördert. Eine Steuerung, die mit Hilfe einer Lagesensorik an den Antriebseinrichtungen die Position der Werkzeughälften 16, 17 erkennt, kann die Transporteinrichtung 32 so ansteuern, dass während die Werkzeughälften 16, 17 in das Packungsblech 10' eingreifen, keine Kraft auf das Packungsblech 10' ausgeübt wird, so dass das für eine Umformung des Packungsblechs 10' erforderliche Material durch die Bewegung der Werkzeughälften 16, 17 selbst nachgezogen werden kann. Wenn die Werkzeughälften 16, 17 außer Eingriff mit dem Packungsblech 10' sind, wird das Packungsblech 10' durch die Transporteinrichtung 32 um einen gewissen Betrag weitertransportiert. Die Transporteinrichtung 32 kann auch dazu eingerichtet sein, das Packungsblech 10' entgegen der Maschinenrichtung M zu fördern, so dass das Packungsblech 10' relativ zu den Werkzeughälften 16, 17 positioniert werden kann.

In der Maschinenrichtung M dem Umformwerkzeug 15 nachgelagert ist eine weitere Führungseinrichtung 35 vorgesehen. Das gewellte Packungsblech 10 wird mit Hilfe der Führungseinrichtung 35 von oben und von unten geführt. Eine seitliche Führung kann zusätzlich vorgesehen sein.

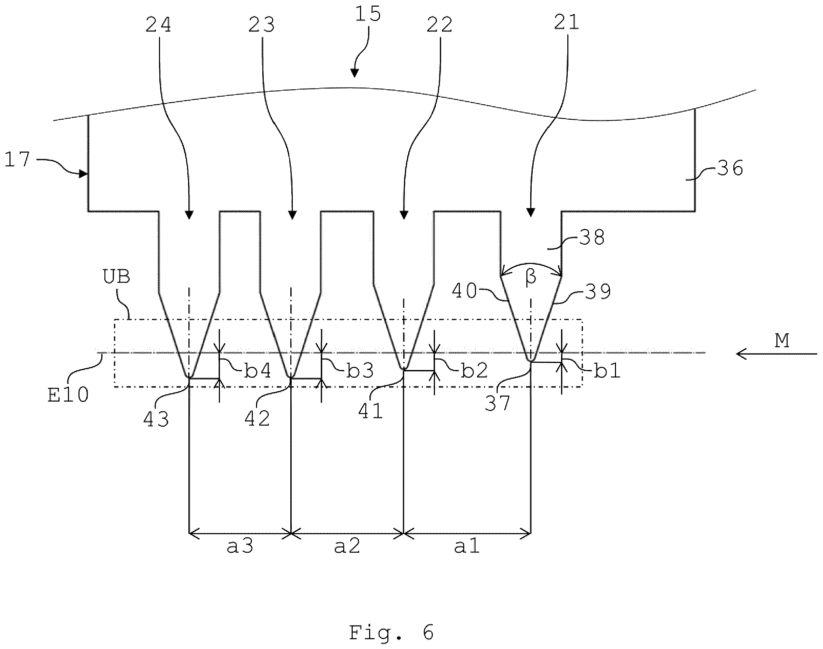

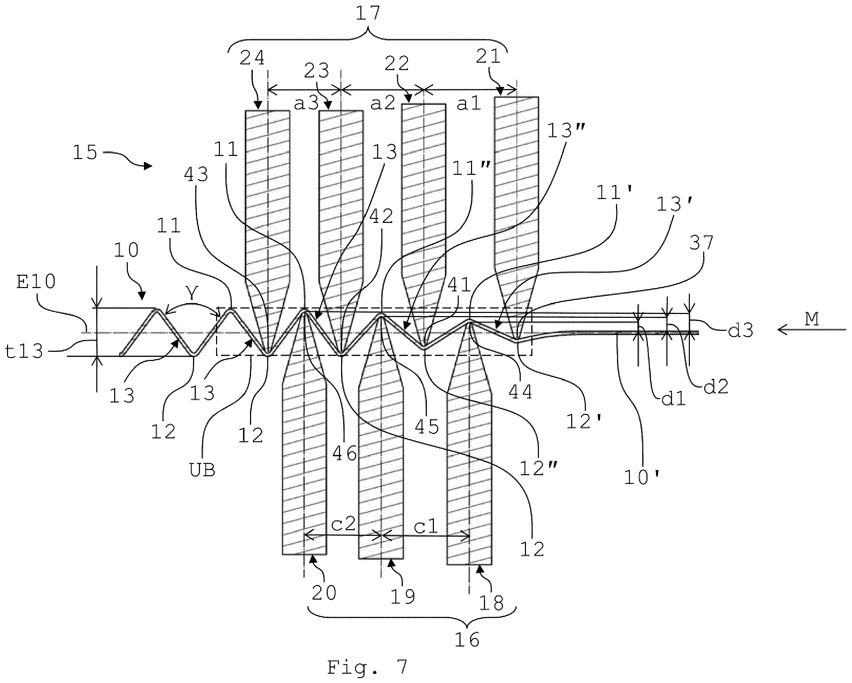

Die Fig. 6 zeigt eine Detailansicht des Umformwerkzeugs 15, wobei nur die zweite Werkzeughälfte 17 dargestellt ist. Die Fig. 7 zeigt eine weitere Detailansicht des Umformwerkzeugs 15. Wie die Fig. 6 zeigt, umfasst die zweite Werkzeughälfte 17 wie die erste Werkzeughälfte 16 einen Basisabschnitt 36, aus dem sich die Biegeleisten 21 bis 24 in Richtung einer Symmetrieebene E10 des Packungsblechs 10' herauserstrecken. Der ersten Biegeleiste 21 ist eine erste Biegekante 37 der zweiten Werkzeughälfte 17 zugeordnet. Die erste Biegeleiste 21 umfasst neben der ersten Biegekante 37 weiterhin einen sich aus dem Basisabschnitt 36 herauserstreckenden Basisabschnitt 38, der sich über zwei Seitenflanken 39, 40 hin zu der ersten Biegekante 37 verjüngt. Die Seitenflanken 39, 40 sind in einem Winkel β zueinander geneigt. Der Winkel β kann zwischen 0° und einem Winkel γ (Fig. 7) der an das Packungsblech 10 angeformten Welle 13 sein.

Die Biegeleisten 22 bis 24 sind analog zu der ersten Biegeleiste 21 aufgebaut und weisen damit jeweils einen Basisabschnitt 38 und zwei Seitenflanken 39, 40 auf. Die Winkel ß der Biegeleisten 21 bis 24 können sich voneinander unterscheiden. Der zweiten Biegeleiste 22 ist eine zweite Biegekante 41 zugeordnet, der dritten Biegeleiste 23 ist eine dritte Biegekante 42 zugeordnet und der vierten Biegeleiste 24 ist eine vierte Biegekante 43 zugeordnet. Die zweite Biegekante 41 ist in der Maschinenrichtung M um einen ersten Abstand a1 von der ersten Biegekante 37 angeordnet. Die dritte Biegekante 42 ist in der Maschinenrichtung M um einen zweiten Abstand a2 beabstandet von der zweiten Biegekante 41 angeordnet und die vierte Biegekante 43 ist um einen dritten Abstand a3 beabstandet von der dritten Biegekante 42 angeordnet. Der zweite Abstand a2 ist größer als der dritte Abstand a3 und der erste Abstand a1 ist größer als der zweite Abstand a2. Das heißt, die Abstände a1 bis a3 verkleinern sich in der Maschinenrichtung M schrittweise.

Weiterhin ragen die Biegekanten 37, 41 bis 43 unterschiedlich weit in einen Umformbereich UB des Umformwerkzeugs 15 hinein. Der Umformbereich UB ist biegesymmetrisch zu der Symmetrieebene E10 angeordnet. Insbesondere ragt die erste Biegekante 37 um einen ersten Abstand b1 über die Symmetrieebene E10 hinaus. Die zweite Biegekante 41 ragt um einen zweiten Abstand b2, der größer als der erste Abstand b1 ist, über die Symmetrieebene E10 hinaus. Die dritte Biegekante 42 ragt um einen dritten Abstand b3, der größer als der zweite Abstand b2 ist, über die Symmetrieebene E10 hinaus und die vierte Biegekante 43 ragt um einen vierten Abstand b4, der größer als der dritte Abstand b3 ist, über die Symmetrieebene E10 hinaus. Das heißt, die Abstände b1 bis b4 vergrößern sich in der Maschinenrichtung M schrittweise, wohingegen sich die Abstände a1 bis a3 in der Maschinenrichtung M schrittweise verkleinern. Die Werkzeughälften 16, 17 können allerdings auch Biegeleisten 18 bis 24 aufweisen, bei denen, insbesondere benachbarte, Biegeleisten 18 bis 24 gleiche Abstände a1 bis a3 oder b1 bis b4 aufweisen. Die Abstände b1 bis b4 können beispielsweise mit Hilfe von Einstellschrauben eingestellt werden.

Wie die Fig. 7 zeigt, umfassen die Biegeleisten 18 bis 20 der ersten Werkzeughälfte 16 eine erste Biegekante 44, die an der ersten Biegeleiste 18 vorgesehen ist, eine zweite Biegekante 45, die an der zweiten Biegeleiste 19 vorgesehen ist, sowie eine dritte Biegekante 46, die an der dritten Biegeleiste 20 vorgesehen ist. Die Biegekanten 44, 46 sind wie die Biegekanten 37, 41 bis 43 in der Maschinenrichtung M voneinander beabstandet angeordnet. Insbesondere ist die zweite Biegekante 45 um einen ersten Abstand c1 von der ersten Biegekante 44 angeordnet und die dritte Biegekante 46 ist um einen zweiten Abstand c2, der kleiner als der erste Abstand c1 ist, von der zweiten Biegekante 45 beabstandet angeordnet. Das heißt, auch bei der ersten Werkzeughälfte 16 reduzieren sich die Abstände c1, c2 zwischen den Biegekanten 44 bis 46 in der Maschinenrichtung M schrittweise. Die Biegeleisten 18 bis 20 der ersten Werkzeughälfte 16 sind ansonsten analog zu den Biegeleisten 21 bis 24 der zweiten Werkzeughälfte 17 aufgebaut.

Die erste Biegekante 44 der ersten Werkzeughälfte 16 ist vorzugsweise mittig, insbesondere mit einem leichten Versatz in Richtung der zweiten Biegekante 41, zwischen der ersten Biegekante 37 und der zweiten Biegekante 41 der zweiten Werkzeughälfte 17 angeordnet. Die zweite Biegekante 45 der ersten Werkzeughälfte 16 ist vorzugsweise mittig, insbesondere mit einem leichten Versatz in Richtung der dritten Biegekante 42, zwischen der zweiten Biegekante 41 und der dritten Biegekante 42 der zweiten Werkzeughälfte 17 angeordnet und die dritte Biegekante 46 der ersten Werkzeughälfte 16 ist vorzugsweise mittig zwischen der dritten Biegekante 42 und der vierten Biegekante 43 der zweiten Werkzeughälfte 17 positioniert. Die Biegekanten 44 bis 46 der Biegeleisten 18 bis 20 ragen wie die Biegekanten 37, 41 bis 43 der Biegeleisten 21 bis 24 unterschiedlich weit in den Umformbereich UB hinein. Insbesondere ragt die erste Biegekante 44 um einen ersten Abstand d1 über die Symmetrieebene E10 hinaus, die zweite Biegekante 45 ragt um einem zweiten Abstand d2, der größer als der erste Abstand d1 ist, über die Symmetrieebene E10 hinaus und die dritte Biegekante 46 ragt um einen dritten Abstand d3, der größer als der zweite Abstand d2 ist, über die Symmetrieebene E10 hinaus. Das heißt, die Abstände d1 bis d3 werden in der Maschinenrichtung M schrittweise größer, wohingegen die Abstände c1, c2 in der Maschinenrichtung M betrachtet schrittweise kleiner werden. Die Abstände d1 bis d3 können beispielsweise mit Hilfe von Einstellschrauben eingestellt werden.

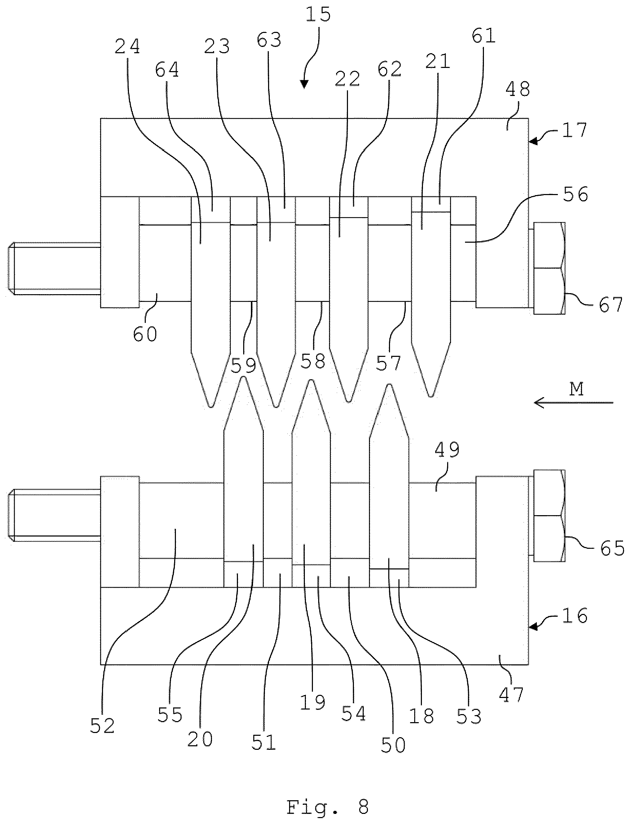

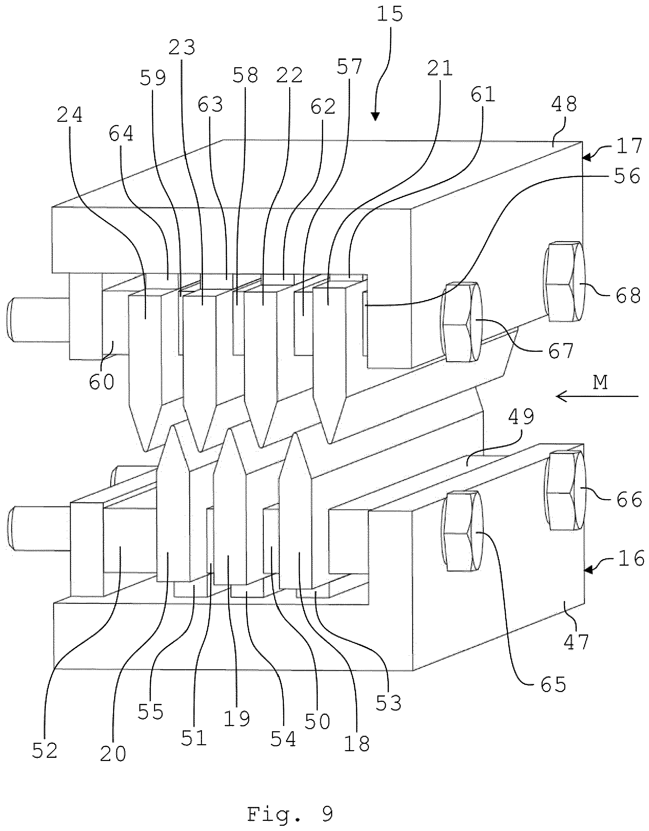

Die Fig. 8 und 9 zeigen jeweils eine Detailansicht einer Ausführungsform des Umformwerkzeugs 15. Bei dieser Ausführungsform des Umformwerkzeugs 15 sind die Biegeleisten 18 bis 24 als einzelne Bauteile ausgeführt. Der ersten Werkzeughälfte 16 ist ein erster Biegeleistenhalter 47 und der zweiten Werkzeughälfte 17 ist ein zweiter Biegeleistenhalter 48 zugeordnet. In dem ersten Biegeleistenhalter 47 sind die Biegeleisten 18 bis 20 aufgenommen. In dem zweiten Biegeleistenhalter 48 sind die Biegeleisten 21 bis 24 aufgenommen. Die Abstände c1, c2 in der Maschinenrichtung M voneinander können durch Unterlagen 49 bis 52 eingestellt werden. Die Abstände d1 bis d3 werden durch entsprechende Unterlagen 53 bis 55 eingestellt.

Analog dazu können bei der zweiten Werkzeughälfte 17 die Abstände a1 bis a3 durch entsprechende Unterlagen 56 bis 60 eingestellt werden. Entsprechend können auch die Abstände b1 bis b4 durch entsprechende Unterlage 61 bis 64 eingestellt werden. Die Biegeleisten 18 bis 20 sowie die Unterlagen 49 bis 55 werden durch zwei Schrauben 65, 66 mit dem ersten Biegeleistenhalter 47 verbunden. Die Biegeleisten 21 bis 24 sowie die Unterlagen 56 bis 64 sind entsprechend durch Schrauben 67, 68 mit dem zweiten Biegeleistenhalter 48 verbunden.

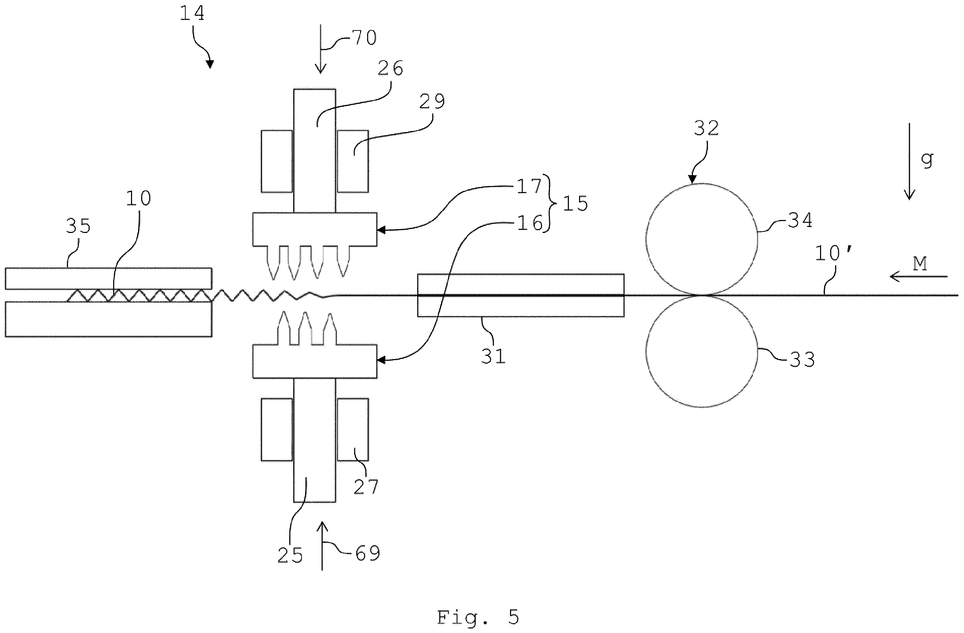

Die Funktionalität der Vorrichtung 14 wird nachfolgend anhand der Fig. 3 bis 7 erläutert. Mit Hilfe der Vorrichtung 14 kann das unverformte Packungsblech 10' zu dem gewellten Packungsblech 10 umgeformt werden. Hierzu werden die erste Werkzeughälfte 16 und die zweite Werkzeughälfte 17, wie in der Fig. 5 mit Hilfe von Pfeilen 69, 70 gezeigt, gleichzeitig und synchron, das heißt, mit gleicher Bewegungsgeschwindigkeit zusammengefahren, so dass die Biegeleisten 18 bis 24 in den Umformbereich UB hineinverlagert werden.

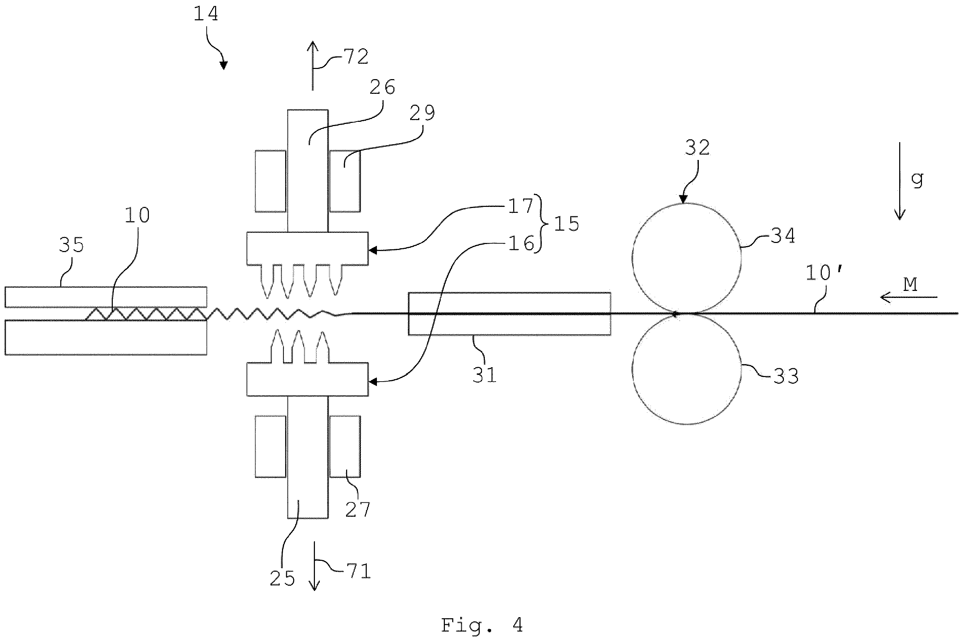

Hierdurch wird, wie in der Fig. 7 gezeigt, an dem zunächst noch unverformten Packungsblech 10' mit Hilfe der jeweiligen ersten Biegekante 37, 44 eine Welle 13' mit einem Wellenberg 11' und einem Wellental 12' angeformt. Die Welle 13' weist nach dem Umformen mit Hilfe der jeweiligen ersten Biegekante 37, 44 eine Tiefe auf, die noch nicht einer gewünschten Tiefe t13 der fertiggestellten Welle 13 entspricht. Die Tiefe t13 ist definiert als ein Abstand zwischen einem Wellenberg 11 und einem Wellental 12 oder umgekehrt des gewellten Packungsblechs 10. Anschließend wird das Umformwerkzeug 15 wieder geöffnet, wobei die erste Werkzeughälfte 16 und die zweite Werkzeughälfte 17 senkrecht zu der Maschinenrichtung M von dem Packungsblech 10' weggefahren werden, wie in der Fig. 4 mit Hilfe von Pfeilen 71, 72 gezeigt ist.

Bei geöffnetem Umformwerkzeug 15 wird das Packungsblech 10' mit Hilfe der Transporteinrichtung 32 in der Maschinenrichtung M so weit transportiert, dass die Welle 13' vor der jeweiligen zweiten Biegekante 41, 45 des Umformwerkzeugs 15 zum Liegen kommt. Das Umformwerkzeug 15 wird dann, wie in den Fig. 3 und 5 gezeigt, wieder geschlossen, wobei die Welle 13' mit den zweiten Biegekanten 41, 45 zu einer Welle 13" mit einem Wellenberg 11" und einem Wellental 12" vertieft wird.

Anschließend wird das Umformwerkzeug 15 wieder geöffnet, und das Packungsblech 10' wird in der Maschinenrichtung M erneut weitertransportiert, bis die Welle 13" vor den jeweiligen dritten Biegekante 42, 46 der zweiten Werkzeughälfte 17 zum Liegen kommt. Das Umformwerkzeug 15 wird wieder geschlossen, wobei die Welle 13" zu der fertigen Welle 13 umgeformt wird. Bei dem erneuten Schließen des Umformwerkzeugs 15 wird die Welle 13" so weit umgeformt, dass die gewünschte Tiefe t13 erreicht ist. Von den Biegekanten 42, 43, 46 erhält die Welle 13 ihre endgültige Form. Nach dem Anformen der Wellen 13 kann das gewellte Packungsblech 10 abgelängt werden.

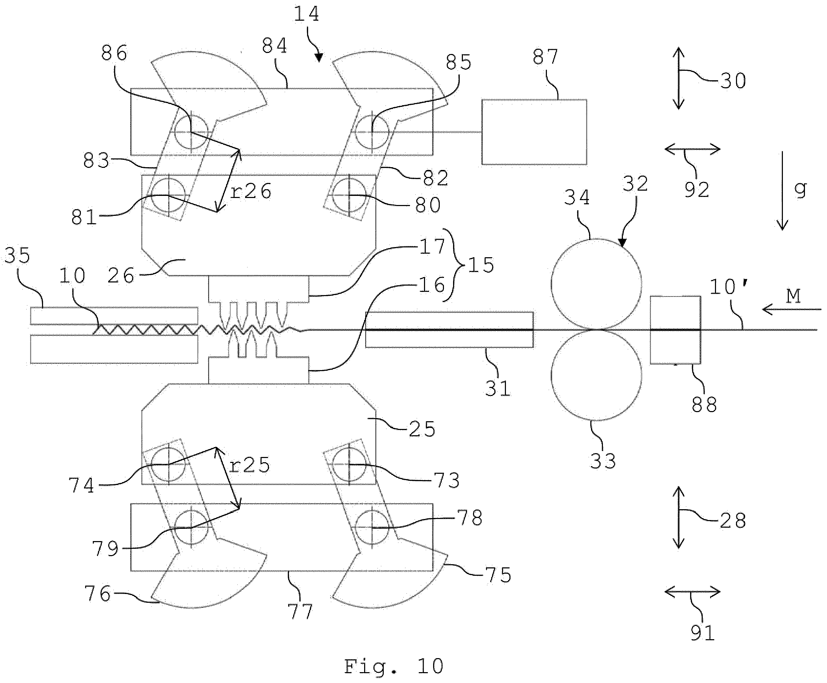

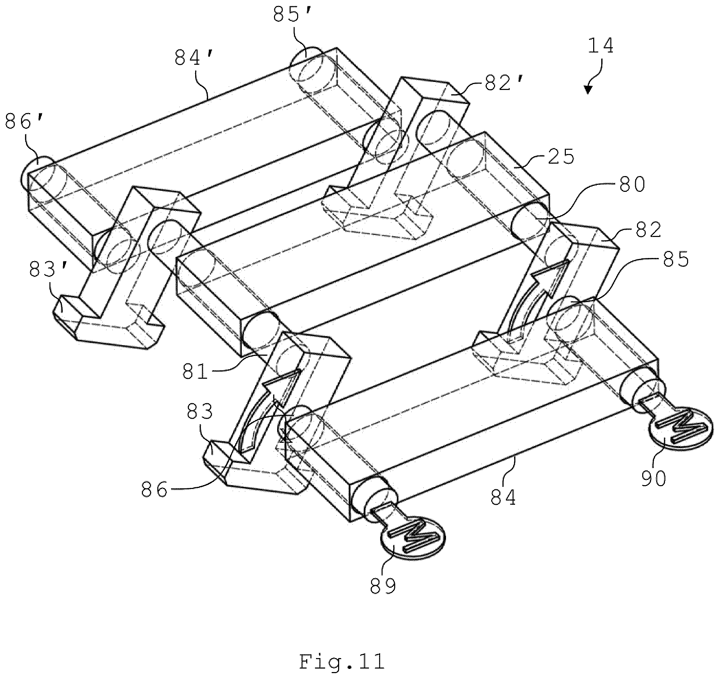

Die Fig. 10 und 11 zeigen eine weitere Ausführungsform einer Vorrichtung 14 zum Herstellen eines gewellten Packungsblechs 10. Die Ausführungsform der Vorrichtung 14 unterscheidet sich von der Ausführungsform der Vorrichtung 14 gemäß den Fig. 3 bis 7 dadurch, dass die Werkzeughälften 16, 17 des Umformwerkzeugs 15 nicht nur translatorisch senkrecht zu der Maschinenrichtung M, sondern auch parallel zu der Maschinenrichtung M bewegt werden. Hierzu umfasst die Vorrichtung 14 zwei an dem ersten Werkzeugträger 25 angeordnete Exzenterachsen 73, 74, an denen Kurbelwellen 75, 76 drehbar gelagert sind.

An einem ersten Lagerblock 77 sind entsprechende Exzenterachsen 78, 79 vorgesehen, an denen die Kurbelwellen 75, 76 drehbar gelagert sind. Weiterhin sind an dem zweiten Werkzeugträger 26 Exzenterachsen 80, 81 vorgesehen, an denen Kurbelwellen 82, 82', 83, 83' drehbar gelagert sind. Weiterhin sind zweite Lagerblöcke 84, 84' vorgesehen, an denen Exzenterachsen 85, 85', 86, 86' vorgesehen sind, an denen die Kurbelwellen 82, 83 drehbar gelagert sind. Weiterhin umfasst die Vorrichtung 14 noch eine Lagesensorik 87 sowie eine Bremseinrichtung 88 zum Abbremsen des Packungsblechs 10'.

Durch eine Drehbewegung der Kurbelwellen 75, 76, 82, 82', 83, 83' werden die Exzenterachsen 73, 74, 80, 81 um die Exzenterachsen 78, 79, 85, 85', 86, 86' auf einer Kreisbahn mit einem Radius r25 beziehungsweise r26 bewegt. Antriebseinrichtungen 89, 90 der Vorrichtung 14 sind miteinander drehwinkelsynchron gekoppelt. Hierdurch machen die Werkzeugträger 25, 26 mit der jeweiligen Werkzeughälfte 16, 17 eine Kreisbewegung mit dem Radius r25, r26, wobei jedoch der jeweilige Werkzeugträger 25, 26 mit der entsprechenden Werkzeughälfte 16, 17 stets parallel zu der Maschinenrichtung M geführt ist. Die nicht gezeigten Antriebseinrichtungen der ersten Werkzeughälfte 16 und die Antriebseinrichtungen 89, 90 der zweiten Werkzeughälfte 17 sind so miteinander gekoppelt, dass eine vertikale Bewegung der Werkzeughälften 16, 17, wie mit Hilfe der Doppelfeile 28, 30 dargestellt, symmetrisch zu der Symmetrieebene E10 des unverformten Packungsblechs 10' ist. Die Kopplung der Antriebseinrichtungen 89, 90 kann elektrisch, mechanisch, beispielsweise mit Hilfe eines Regelelements oder eines Getriebes oder hydraulisch erfolgen.

Mit Hilfe der rotatorischen Bewegung der Werkzeughälften 16, 17 wird zum einen das Packungsblech 10' senkrecht zu der Symmetrieebene E10 verformt und zum anderen parallel zu der Maschinenrichtung M entsprechend einer horizontalen Komponente eines Bewegungsvektors der Werkzeughälften 16, 17 bewegt. Diese horizontale Bewegung ist in der Fig. 10 mit Hilfe von Doppelpfeilen 91, 92 dargestellt. Das unverformte Packungsblech 10' wird dabei durch folgende Einflüsse bewegt. Es erfolgt eine Bewegung des Packungsblechs 10' mit Hilfe einer horizontalen Komponente der Werkzeugbewegung. Durch das Eindringen der Werkzeughälften 16, 17 in das Packungsblech 10' wird das Packungsblech 10' nachgezogen. Nach dem Kontaktverlust mit dem Umformwerkzeug 15 bewegt sich das Packungsblech 10' entsprechend der Trägheit der Masse zunächst noch mit der ursprünglichen Geschwindigkeit weiter. Unter optimalen Bedingungen ist die Bewegung des Packungsblechs 10' so, dass keine zusätzlichen Vorschub- oder Bremsmaßnahmen erforderlich sind. In diesem Fall ist das Umformwerkzeug 15 selbst eine Transporteinrichtung.

Optional kann die zusätzliche Transporteinrichtung 32 vorgesehen sein. Die Transporteinrichtung 32 kann durch einen Walzen- oder Förderbandvorschub erfolgen, wobei sich oberhalb und unterhalb des Packungsblechs 10' die angetriebenen Walzen 33, 34 oder ein Förderband befindet. Eine Steuerung der Vorrichtung 14, die mit Hilfe der Lagesensorik 87 an den Antriebseinrichtungen 89, 90 die Position der Werkzeughälften 16, 17 erkennt, steuert die Transporteinrichtung 32 so an, dass, während das Umformwerkzeug 15 im Eingriff mit dem Packungsblech 10' ist, keine Kraft auf das Packungsblech 10' ausgeübt wird. Dadurch wird die von dem Umformwerkzeug 15 verursachte Blechbewegung nicht behindert. Wenn das Umformwerkzeug 15 außerhalb des Eingriffs mit dem Packungsblech 10' ist, wird das Packungsblech 10' durch die Transporteinrichtung 32 um den erforderlichen Betrag weiter oder zurücktransportiert. Dieser Betrag kann konstant sein. Alternativ kann die Position des Packungsblechs 10' stets überwacht werden und individuell nach jedem Hub die Lage des Packungsblechs 10' durch die Transporteinrichtung 32 neu eingeregelt werden.

Statt der Transporteinrichtung 32 oder zusätzlich zu dieser kann die Bremseinrichtung 88 vorgesehen sein. Die Bremseinrichtung 88 kann eine Bremseinrichtung zum Aufbringen einer konstanten Bremskraft sein. Dies kann elektrisch durch Wirbelströme oder mechanisch durch Bremsklötze erfolgen. Die Bremskraft kann auf die Bremsklötze durch einstellbare Federn, Gewichte, Piezoaktoren oder Druckluftzylinder aufgebracht werden. Die Bremseinrichtung 88 kann auch ein geregeltes und gesteuertes System sein. Die Steuerung errechnet dabei anhand der Kurbelwellenwinkellage aus der Lagesensorik 87 den optimalen Zeitpunkt und die Stärke des Bremsvorgangs, so dass das Packungsblech 10' für den nächsten Werkzeugeingriff die optimale Position einnimmt. Auch hier kann die Bremse elektrisch durch Wirbelströme oder mechanisch durch Bremsklötze erfolgen. Die Bremsklötze können durch Piezoaktoren, Hydraulikzylinder oder Elektrozylinder angetrieben werden.

Durch das mehrstufige Umformwerkzeug 15 wird das Packungsblech 10' bei jedem Hub nur gering verformt. Hierdurch ist das Packungsblech 10' durch die Umformung nicht zu stark belastet und es können höhere Durchsatzgeschwindigkeiten realisiert werden. Durch die symmetrische Arbeitsweise der ersten Werkzeughälfte 16 und der zweiten Werkzeughälfte 17 zur Symmetrieebene E10 wird eine Mittelebene des Packungsblechs 10'während der Bearbeitung nicht verschoben. Hierdurch kommt es zu keiner Anregung einer Blechschwingung senkrecht zu der Blechebene. Dies ist für hohe Durchsatzgeschwindigkeiten von Vorteil. Während der Blechumformung wird beim rotatorischen Verfahren ein Teil der Vorschubbewegung realisiert. Auch dies erhöht die Durchsatzgeschwindigkeit.

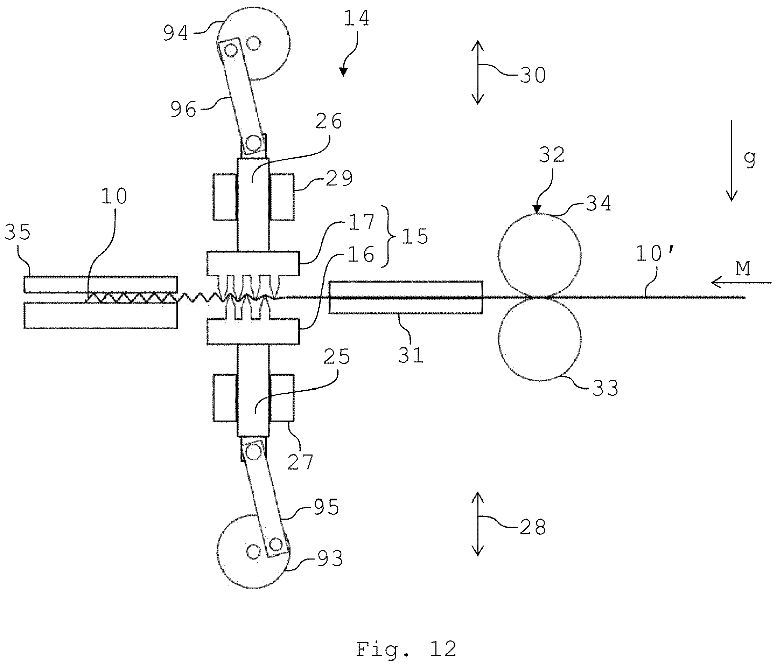

Die Fig. 12 zeigt eine weitere Ausführungsform einer Vorrichtung 14 zum Fertigen des gewellten Packungsblechs 10. Die Vorrichtung gemäß der Fig. 12 unterscheidet sich von der Vorrichtung gemäß den Fig. 3 bis 7 dadurch, dass die Werkzeughälften 16, 17 jeweils durch eine Kurbelwelle 93, 94 und ein sowohl mit der jeweiligen Kurbelwelle 93, 94 und dem Werkzeugträger 25, 26 gekoppelte Pleuel 95, 96 erfolgt.

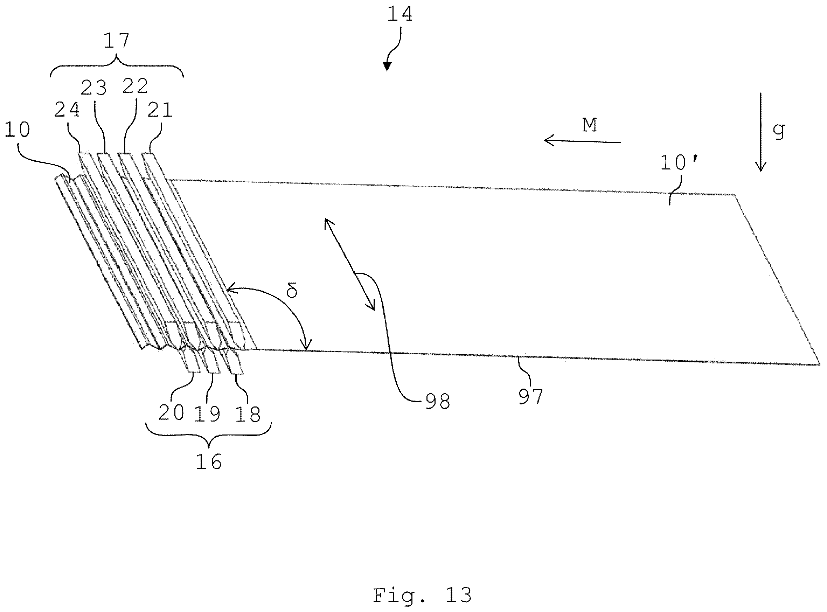

Die Fig. 13 zeigt eine weitere Ausführungsform einer Vorrichtung 14 zum Herstellen des gewellten Packungsblechs 10. Bei dieser Ausführungsform der Vorrichtung 14 sind die erste Werkzeughälfte 16 und die zweite Werkzeughälfte 17 so ausgebildet, dass die jeweiligen Biegeleisten 18 bis 24 nicht senkrecht zu einer Seitenkante 97 des Packungsblechs 10', sondern schräg in einem Winkel δ zu dieser angeordnet sind. Insbesondere sind die Biegeleisten 18 bis 24 damit auch schräg zu der Maschinenrichtung M angeordnet. Die einzelnen Biegeleisten 18 bis 24 können dabei, wie mit Hilfe eines Doppelpfeils 98 gezeigt, seitlich verschiebbar gelagert angeordnet sein, um eine seitliche Bewegung der Biegeleisten 18 bis 24 beim Eindringen der Biegeleisten 18 bis 24 in das Packungsblech 10', die sich aus einer Schrägwellung ergibt, zu kompensieren.

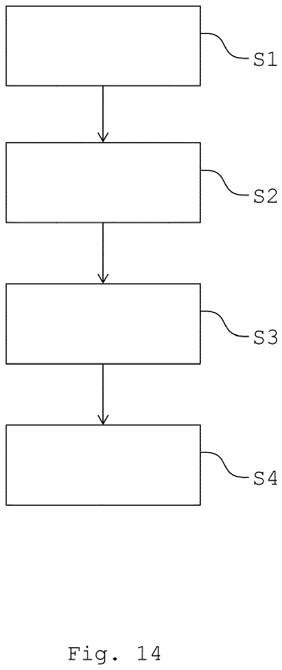

Die Fig. 14 zeigt ein schematisches Blockdiagramm einer Ausführungsform eines Verfahrens zum Herstellen des gewellten Packungsblechs 10. Bei dem Verfahren wird in einem Schritt S1 das unverformte Packungsblech 10' bereitgestellt. Beispielsweise kann das unverformte Packungsblech 10' als sogenannter Coil bereitgestellt werden. In einem Schritt S2 wird das Packungsblech 10' mit Hilfe der ersten Biegekante 37, 44 des Umformwerkzeugs 15 umgeformt, um an dem Packungsblech 10' die Welle 13' anzuformen.

In einem Schritt S3 wird das Packungsblech 10' in der Maschinenrichtung M transportiert. Hierzu kann die Transporteinrichtung 32 eingesetzt werden oder das Umformwerkzeug 15 selbst. Anschließend wird das Packungsblech 10' mit Hilfe der in der Maschinenrichtung M von der ersten Biegekante 37, 44 beabstandet angeordneten zweiten Biegekante 41, 45 erneut umgeformt, um die Welle 13' zu vertiefen. Das Packungsblech 10' kann dann noch mit der dritten Biegekante 42, 46 bis vierten, insbesondere n-ten, Biegekante 43 des Umformwerkzeugs 15 so oft umgeformt werden, bis die Welle 13 die gewünschte Tiefe t13 aufweist. Dabei wird das Packungsblech 10' vor jedem Umformen jeweils in der Maschinenrichtung M transportiert.

Obwohl die vorliegende Erfindung anhand von Ausführungsbeispielen vollständig beschrieben wurde, ist sie vielfältig modifizierbar.

### Verwendete Bezugszeichen

- 1: Stoffaustauschkolonne
- 2: Behälter
- 3: Packung
- 4: Packungsscheibe
- 5: Packungsscheibe
- 6: Packungsscheibe
- 7: Packungsscheibe
- 8: Packungsscheibe
- 9: Dichtkragen
- 10: Packungsblech
- 10': Packungsblech
- 11: Wellenberg
- 11': Wellenberg
- 11": Wellenberg
- 12: Wellental
- 12': Wellental
- 12": Wellental
- 13: Welle
- 13': Welle
- 13": Welle
- 14: Vorrichtung
- 15: Umformwerkzeug
- 16: Werkzeughälfte
- 17: Werkzeughälfte
- 18: Biegeleiste
- 19: Biegeleiste
- 20: Biegeleiste
- 21: Biegeleiste
- 22: Biegeleiste
- 23: Biegeleiste
- 24: Biegeleiste
- 25: Werkzeugträger
- 26: Werkzeugträger
- 27: Führungseinrichtung
- 28: Doppelpfeil
- 29: Führungseinrichtung
- 30: Doppelpfeil
- 31: Führungseinrichtung
- 32: Transporteinrichtung
- 33: Walze
- 34: Walze
- 35: Führungseinrichtung
- 36: Basisabschnitt
- 37: Biegekante
- 38: Basisabschnitt
- 39: Seitenflanke
- 40: Seitenflanke
- 41: Biegekante
- 42: Biegekante
- 43: Biegekante
- 44: Biegekante
- 45: Biegekante
- 46: Biegekante
- 47: Biegeleistenhalter
- 48: Biegeleistenhalter
- 49: Unterlage
- 50: Unterlage
- 51: Unterlage
- 52: Unterlage
- 53: Unterlage
- 54: Unterlage
- 55: Unterlage
- 56: Unterlage
- 57: Unterlage
- 58: Unterlage
- 59: Unterlage
- 60: Unterlage
- 61: Unterlage
- 62: Unterlage
- 63: Unterlage
- 64: Unterlage
- 65: Schraube
- 66: Schraube
- 67: Schraube
- 68: Schraube
- 69: Pfeil
- 70: Pfeil
- 71: Pfeil
- 72: Pfeil
- 73: Exzenterachse
- 74: Exzenterachse
- 75: Kurbelwelle
- 76: Kurbelwelle
- 77: Lagerblock
- 78: Exzenterachse
- 79: Exzenterachse
- 80: Exzenterachse
- 81: Exzenterachse
- 82: Kurbelwelle
- 82': Kurbelwelle
- 83: Kurbelwelle
- 83': Kurbelwelle
- 84: Lagerblock
- 84': Lagerblock
- 85: Exzenterachse
- 85': Exzenterachse
- 86: Exzenterachse
- 86': Exzenterachse
- 87: Lagesensorik
- 88: Bremseinrichtung
- 89: Antriebseinrichtung
- 90: Antriebseinrichtung
- 91: Doppelpfeil
- 92: Doppelpfeil
- 93: Kurbelwelle
- 94: Kurbelwelle
- 95: Pleuel
- 96: Pleuel
- 97: Seitenkante
- 98: Doppelpfeil
- a1: Abstand
- a2: Abstand
- a3: Abstand
- b1: Abstand
- b2: Abstand
- b3: Abstand
- b4: Abstand
- c1: Abstand
- c2: Abstand
- d1: Abstand
- d2: Abstand
- d3: Abstand
- E10: Symmetrieebene
- g: Schwerkraftrichtung
- h3: Höhe
- M: Maschinenrichtung
- M2: Mittelachse
- r25: Radius
- r26: Radius
- t13: Tiefe
- UB: Umformbereich
- α: Winkel
- ß: Winkel
- γ: Winkel
- δ: Winkel

## Patentansprüche

1. Verfahren zum Herstellen eines gewellten Packungsblechs (10) für eine strukturierte Packung (3) einer Stoffaustauschkolonne (1), mit folgenden Schritten:
a) Bereitstellen (S1) eines unverformten Packungsblechs (10'),
b) Umformen (S2) des Packungsblechs (10') mit Hilfe einer ersten Biegekante (37, 44) eines Umformwerkzeugs (15), um an dem Packungsblech (10') eine Welle (13') anzuformen,
c) Transport (S3) des Packungsblechs (10') in einer Maschinenrichtung (M), und
d) Erneutes Umformen (S4) des Packungsblechs (10') mit Hilfe einer in der Maschinenrichtung (M) von der ersten Biegekante (37, 44) beabstandet angeordneten zweiten Biegekante (41, 45) des Umformwerkzeugs (15), um die Welle (13') zu vertiefen.

2. Verfahren nach Anspruch 1, wobei das Packungsblech (10') nach dem Schritt d) mit Hilfe einer dritten Biegekante (42, 46) bis n-ten Biegekante (43) des Umformwerkzeugs (15) so oft umgeformt wird, bis die Welle (13) eine gewünschte Tiefe (t13) aufweist, und wobei das Packungsblech (10') vor jedem Umformen jeweils in der Maschinenrichtung (M) transportiert wird.

3. Verfahren nach Anspruch 1 oder 2, wobei zum Umformen des Packungsblechs (10') eine erste Werkzeughälfte (16) und eine zweite Werkzeughälfte (17) des Umformwerkzeugs (15) gegensinnig und senkrecht zu der Maschinenrichtung (M) bewegt werden.

4. Verfahren nach Anspruch 3, wobei zum Umformen des Packungsblechs (10') die erste Werkzeughälfte (16) und die zweite Werkzeughälfte (17) gleichsinnig und parallel zu der Maschinenrichtung (M) bewegt werden.

5. Verfahren nach Anspruch 4, wobei das Packungsblech (10') mit Hilfe der zu der Maschinenrichtung (M) parallelen Bewegung der ersten Werkzeughälfte (16) und der zweiten Werkzeughälfte (17) in der Maschinenrichtung (M) transportiert wird.

6. Verfahren nach Anspruch 5, wobei das Packungsblech (10') mit Hilfe einer Bremseinrichtung (88) abgebremst wird.

7. Verfahren nach einem der Ansprüche 3 - 6, wobei das Packungsblech (10') zwischen einander gegenüberliegenden Biegekanten (44, 45, 46) der ersten Werkzeughälfte (16) und Biegekanten (37, 41, 42, 43) der zweiten Werkzeughälfte (17) verformt wird.

8. Verfahren nach einem der Ansprüche 1 - 6, wobei das Packungsblech (10') mit Hilfe einer Transporteinrichtung (32), insbesondere einer berührungslosen Transporteinrichtung, weitertransportiert wird.

9. Vorrichtung (14) zum Herstellen eines gewellten Packungsblechs (10) für eine strukturierte Packung (3) einer Stoffaustauschkolonne (1), mit einem Umformwerkzeug (15), das eine erste Biegekante (37, 44), die dazu eingerichtet ist, an einem unverformtes Packungsblech (10') eine Welle (13') anzuformen, und eine in einer Maschinenrichtung (M) von der ersten Biegekante (37, 44) beabstandet angeordnete zweite Biegekante (41, 45) umfasst, die dazu eingerichtet ist, die Welle (13') zu vertiefen.

10. Vorrichtung nach Anspruch 9, wobei das Umformwerkzeug (15) eine erste Werkzeughälfte (16) und eine zweite Werkzeughälfte (17) umfasst, die zum Umformen des Packungsblechs (10') gegensinnig und senkrecht zu der Maschinenrichtung (M) bewegbar sind.

11. Vorrichtung nach Anspruch 10, wobei die erste Werkzeughälfte (16) und die zweite Werkzeughälfte (17) zum Umformen des Packungsblechs (10') gleichsinnig und parallel zu der Maschinenrichtung (M) bewegbar sind.

12. Vorrichtung nach einem der Ansprüche 9 - 11, ferner umfassend eine Transporteinrichtung (32), insbesondere eine berührungslose Transporteinrichtung, die dazu eingerichtet ist, das Packungsblech (10') in der Maschinenrichtung (M) zu transportieren, so dass die Welle (13') von der ersten Biegekante (37, 44) zu der zweiten Biegekante (41, 45) transportierbar ist.

13. Vorrichtung nach einem der Ansprüche 9 - 12, wobei das Umformwerkzeug (15) eine dritte Biegekante (42, 46) bis n-te Biegekante (43) aufweist, die in der Maschinenrichtung (M) jeweils voneinander beabstandet angeordnet sind.

14. Vorrichtung nach Anspruch 13, wobei sich ein jeweiliger Abstand (a1, a2, a3, c1, c2) zwischen der ersten Biegekante (37, 44) bis n-ten Biegekante (43) in der Maschinenrichtung (M) verkleinert.

15. Vorrichtung nach Anspruch 13 oder 14, wobei sich ein jeweiliger Abstand (b1, b2, b3, d1, d2, d3) mit dem sich die erste Biegekante (37, 44) bis n-te Biegekante (43) in einen Umformbereich (UB) des Umformwerkzeugs (15) hineinerstreckt in der Maschinenrichtung (M) vergrößert.
